# EUROPEAN PATENT SPECIFICATION

(11) **EP 3 290 257 B1**
(45) Date of publication and mention of the grant of the patent: **30.12.2020**
(21) Application number: 17174627.4
(22) Date of filing: 06.06.2017
(51) Int. Cl.: H02M 3/335, H02M 7/49, B60L 1/00, B60L 15/00, B60L 50/10, B60L 50/40, B60L 58/21, B60L 50/64, B60L 58/20, B60L 58/18, H02M 1/00

(54) **INTEGRATED MODULAR ELECTRIC POWER SYSTEM FOR A VEHICLE**
INTEGRIERTES MODULARES STROMVERSORGUNGSSYSTEM FÜR EIN FAHRZEUG
SYSTÈME D'ALIMENTATION ÉLECTRIQUE MODULAIRE INTÉGRÉ POUR UN VÉHICULE

(30) Priority: 12.07.2016 US 201615207901
(43) Date of publication of application: 07.03.2018
(73) Proprietor: Hamilton Sundstrand Corporation, Charlotte, NC 28217 (US)
(72) Inventor: ROZMAN, Gregory I., Rockford, IL Illinois 61114 (US); MOSS, Steven J., Rockford, IL Illinois 61114 (US)
(74) Representative: Dehns

(56) References cited:
- EP-A1- 2 815 913
- WO-A2-2014/026840
- CN-A- 104 158 212
- CN-A- 104 269 875

## Description

### TECHNICAL FIELD

The present disclosure relates generally to vehicular power systems, and more specifically to an integrated modular electric power system for a vehicle.

### BACKGROUND

Certain ground vehicles, such as those utilized in military and similar applications, use hybrid electric technology including high voltage DC power generation. A typical electric power system architecture includes an un-regulated permanent magnet generator coupled to a boost type pulse width modulated power converter, such as an active rectifier, and a high voltage battery.

Multilevel topologies for achieving this system have been considered in order to achieve a low harmonic distortion with moderate switching frequency and reduced electromagnetic interference emissions compared to standard two-level active rectifiers / inverters. In some applications, the near constant power load over the duration of vehicle operating time from a base load can be coupled with high peak loads that occur periodically, or for brief durations during the operation of the vehicle. To support the peak load requirements, re-chargeable high energy storage batteries are included within the electric power system. Such systems, however, may require additional power dissipating resistors handling regenerative loads with fully charged batteries. WO 2014/026840 discloses a power distribution system for supplying electrical power in a data center. CN 104,269,875 discloses a hybrid energy storage topological structure on the basis of a modular multi-level converter.

### SUMMARY OF THE INVENTION

According to a first aspect, there is provided a power system architecture according to claim 1.

In a second aspect, there is provided a method for providing electric power to a vehicle according to claim 2.

Another example of the above described exemplary method for providing electric power to a vehicle further includes providing a first DC voltage to the first DC bus, and at least one second DC voltage to the second DC bus, wherein the DC voltage of the second DC bus is lower than the DC voltage of the first DC bus.

These and other features of the present invention can be best understood from the following specification and drawings, the following of which is a brief description.

### BRIEF DESCRIPTION OF THE DRAWINGS

Figure 1 schematically illustrates an exemplary modular electric power system for a vehicle including both AC and DC power distribution.
Figure 2 schematically illustrates a first example source management unit for the electric power system of Figure 1.
Figure 3 schematically illustrates an exemplary multi-function power module for utilization in conjunction with the examples of Figures 1 and 2.
Figure 4 schematically illustrates a second example source management unit for the electric power system of Figure 1
Figure 5 schematically illustrates an exemplary multi-function power module for utilization in conjunction with the examples of Figures 1 and 4.
Figure 6 schematically illustrates an alternate exemplary modular electric power system for a vehicle including only DC power distribution.
Figure 7 schematically illustrates an exemplary source management unit for utilization with the modular electric power system of Figure 6.
Figure 8 schematically illustrates an exemplary multi-function power module of utilization with the examples of Figures 6 and 7.

### DETAILED DESCRIPTION OF AN EMBODIMENT

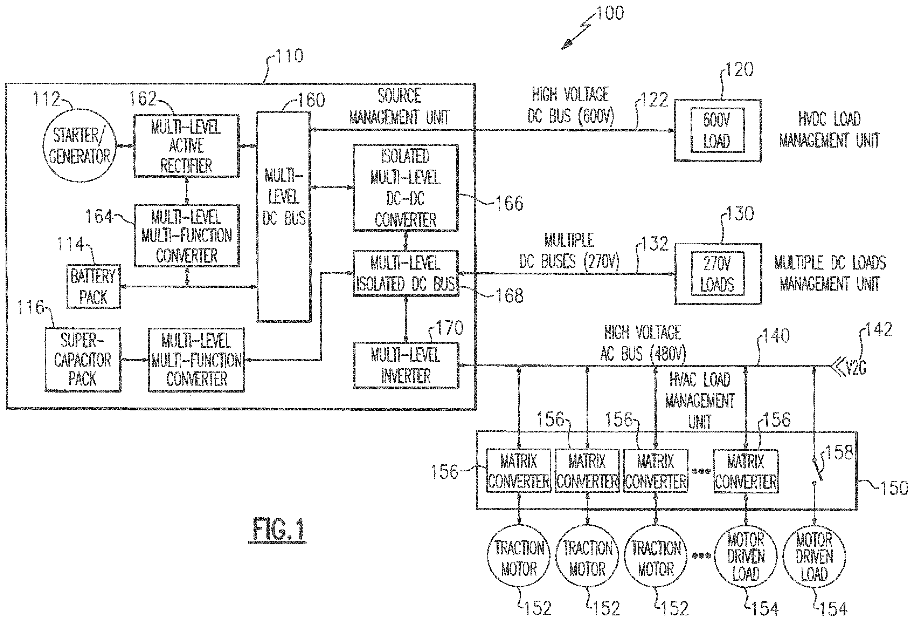

Figure 1 schematically illustrates an exemplary electric power system 100 for utilization in a vehicle, such as a military vehicle. The electric power system 100 provides multiple levels of DC power to various loads 120, 130, as well as providing AC power to multiple AC loads 152, 154, and is controlled by a general vehicle controller.

The electric power system 100 includes a source management unit 110 that controls the distribution of power from multiple power sources 112, 114, 116 to multiple loads 120, 130, 152, 154. The source management unit 110 is connected to a high voltage DC load 120 via a high voltage DC bus 122, which provides power to one or more corresponding load. The source management unit 110 is also connected to one or more low voltage DC loads 130 via one or more low voltage DC busses 132. While illustrated herein as a single load 130 connected to the source management unit 110 via a single bus 132 for simplicity, each of the loads 130 is connected to the source management unit 110 via a distinct bus 132.

Also connected to the source management unit 110 is a high voltage AC bus 140. The AC bus 140, in some examples, is configured to connect to a ground based voltage source 142 such as a power grid. The high voltage AC bus 140 provides power to multiple traction motors 152 and motor driven loads 154 through a high voltage AC load management unit 150. In alternative examples, any other AC driven load can be utilized in place of, or in addition to, the illustrated loads 152, 154. The high voltage AC load management unit 150 includes multiple converters 156 and switches 158 that control the provision of power from the AC bus 140 to the various connected loads 152, 154 and vice versa. In some examples, one or more of the loads 152, 154 is regenerative and provides power back to the source management unit 110 through the AC bus 140 during some modes of operation.

The source management unit 110 includes multiple power sources such as a starter/generator 112, a battery pack including one or more batteries 114, and a supercapacitor 116. In alternative examples, any other power source can be utilized instead of, or in addition to, the illustrated power sources 112, 114, 116.

The starter/generator 112 is connected to a multi-level DC bus 160 via a multi-level active rectifier 162. The battery 114 is also connected to the multi-level DC bus 160, and connected to the multi-level active rectifier 162 via a multi-level multi-function converter 164. Through these connections, the source management unit 110 controls the power provided from the starter/generator 112 and the battery pack 114 to the high voltage DC bus 122, and thus to the high voltage load 120.

In order to provide power from the multi-level DC bus 160 to the low voltage DC busses 132, which is at a lower voltage than the high voltage DC bus 122, the low voltage DC bus 132 is connected to the multi-level DC bus 160 through an isolated Multi-level DC-DC converter 166 that adjusts the voltage output from the multi-level DC bus. The isolated multi-level DC-DC converter 166 in turn provides the power to a multi-level isolated DC bus 168 that feeds each of the multiple low voltage DC busses 132. The high voltage AC bus 140 is connected to the multi-level isolated DC bus 168 via a multi-level inverter 170.

The preceding architecture is constructed of multiple substantially identical multi-function power modules. As used herein, "substantially identical" refers to the electrical circuits contained within the multi-function power modules, and one of skill in the art will understand that the physical arrangement of the circuits, as well as the housings containing the circuits, can be varied. Further, the utilization of multiple substantially identical modules allows the source management unit 110 to be scaled and adjusted for varied requirements without an extensive overhaul to the underlying system or controls.

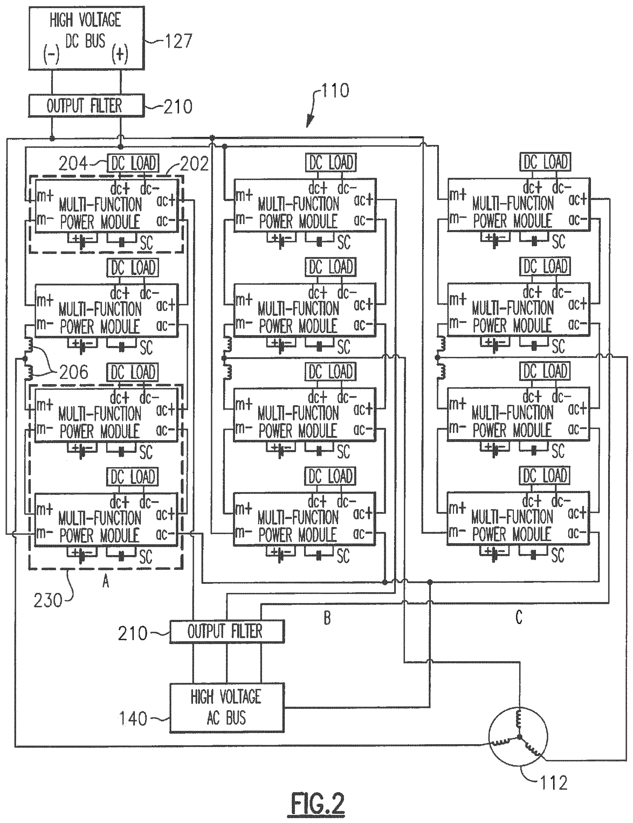

With continued reference to Figure 1, and with like numerals indicating like elements, Figure 2 schematically illustrates an exemplary arrangement of multi-function power modules 202 arranged to create the source management unit 110 illustrated in Figure 1. Each of the multiple multi-function power modules 202 provides an output to a DC load 204, such as the low voltage DC load 130 of Figure 1. The power modules 202 are arranged in phases A, B, C, with each phase A, B, C including two phase arms 230, resulting in a total of six phase arms 230. Each phase arm 230 is connected to a three phase permanent magnet generator 112 via interface inductors 206.

Each phase A, B, C is further connected to the high voltage DC bus 122 through an output filter 210 that is directly, or indirectly, connected to a DC output of each power module 202. The cascaded connection to the DC output of each power module results in the total DC output achieving a high voltage, relative to the voltage at the DC load 204 connected to each module. Each power module 202 also includes an AC output. The AC outputs are connected in a chain configuration, with the last power module 202 in each phase A, B, C being connected to the high voltage AC bus via a second output filter 212.

With continued reference to Figures 1 and 2, Figure 3 schematically illustrates an exemplary multi-function power module 202, for utilization in the source management unit 110 of Figure 2. The multi-function power module 202 includes a DC input/output 310 connected to a multi-level rectifier section 320. The multi-level rectifier section 320 is a half bridge configuration with a parallel capacitor. Connected to an output of the multilevel rectifier section 320 is a multi-function DC-DC converter 330 that receives power from the battery 114 and adjusts the voltage on a non-isolated DC bus or charges the battery 114.

The combined power from the DC input/output 310 and the battery 114 is then provided to an isolated DC-DC converter 340, that provides a DC voltage output that is electrically isolated from the input. The output of the isolated DC-DC converter 340 is provided to a multilevel inverter section 350. The multi-level inverter section 350 generates an AC output 352 and a DC output 354.

The DC output 354 is provided to a second multi-function DC-DC converter 360. The second multi-function DC-DC converter 360 includes another input connected to the super capacitor 116, and regulates voltage on the isolated DC bus or charges the supercapacitor of the multi-function power module 202.

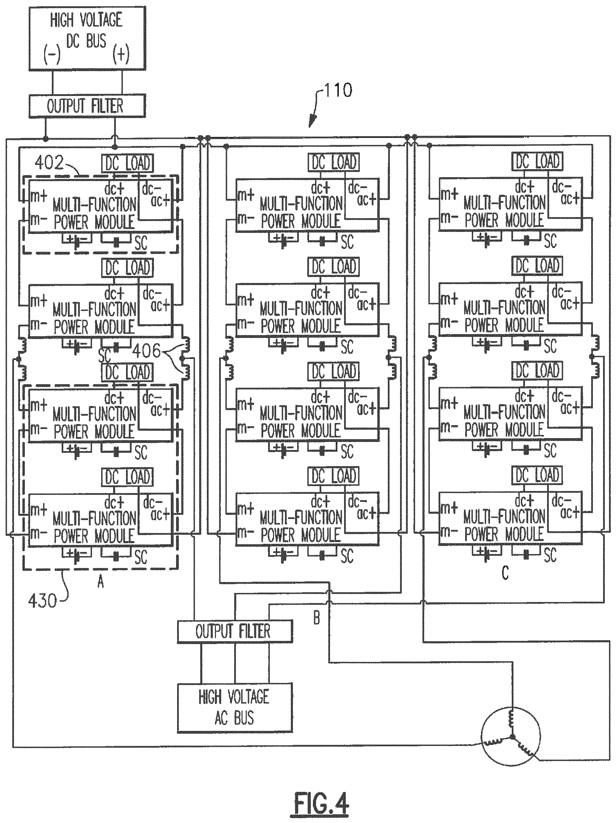

With continued reference to Figure 1, and with like numerals indicating like elements, Figure 4 schematically illustrates an alternate exemplary arrangement of multi-function power modules 402 arranged to create the source management unit 110 illustrated in Figure 1. The source management unit 110 of Figure 4 is arranged in a similar fashion to the source management unit of Figure 2, with the addition of a second set of interface inductors 406 at each phase leg 430.

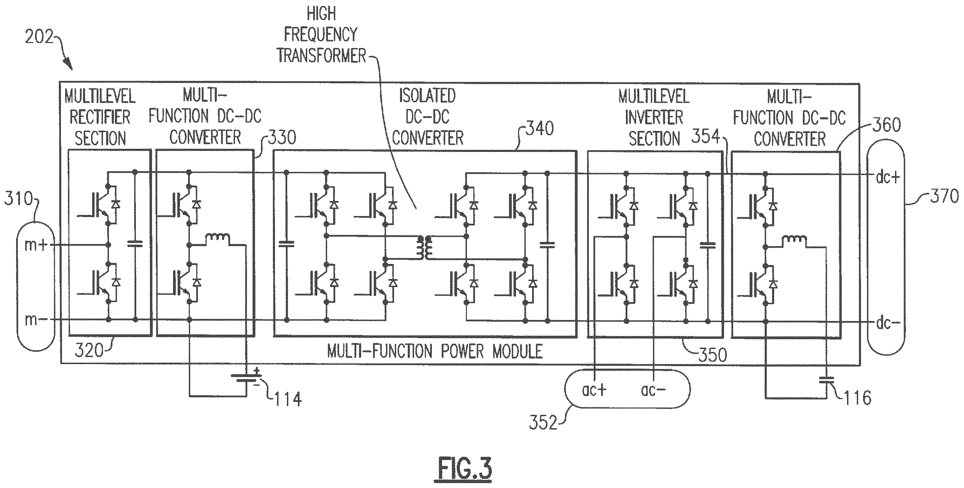

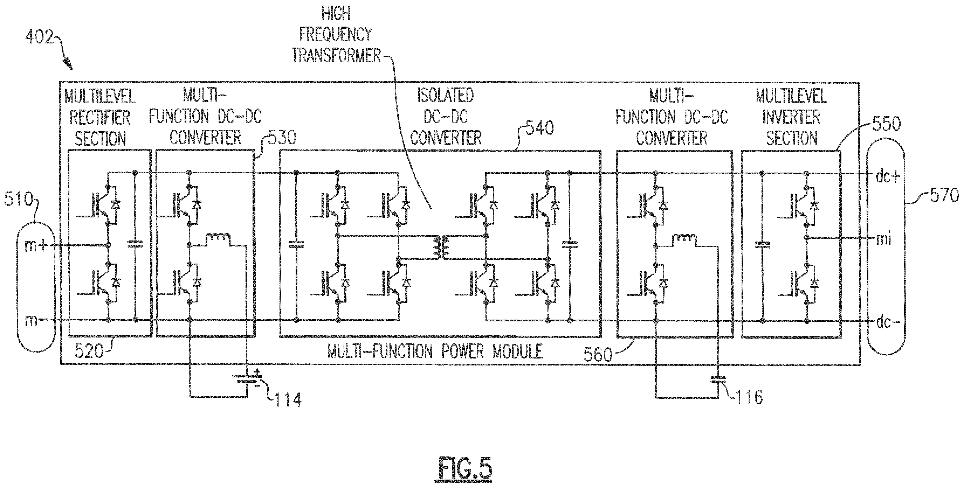

In order to accommodate the alternate example source management unit of Figure 4, the multi-function power modules 402 are modified from the example multi-function power modules illustrated in Figure 3. With continued reference to Figures 1 and 4, and with like numerals indicating like elements, Figure 5 schematically illustrates a multi-function power module 402, such as can be utilized in the source management unit 110 of Figure 4.

The multi-function power module 402 includes a DC input/output 510 connected to a multi-level rectifier section 520. The multi-level rectifier section 520 is a half bridge configuration with a parallel capacitor. Connected to an output of the multilevel rectifier section 520 is a multi-function DC-DC converter 530 that receives power from the battery 114 and adjusts the voltage on the non-isolated DC bus or charges the battery 114.

The combined power from the DC input/output 510 and the battery 114 is then passed to an isolated DC-DC converter 540. The isolated DC-DC converter 540 provides a DC voltage output that is electrically isolated from the input. The DC voltage output is provided to a second multi-function DC-DC converter 560, which adjusts the voltage on isolated DC bus or charges the supercapacitor 116. The isolated DC voltage is provide to the multi-level inverter section 550, which generates a corresponding multi-function power module 402 output 570.

As described above, each of the multi-function power modules 402 are configured as shown in Figure 4, and controlled via a controller, to create the power system configuration of Figure 1.

In some vehicles, AC power is not required. In such vehicles, the electric power system 100 omits the components and configurations designed to distribute AC power. However, due to the presence of a starter/generator power source within the source management unit, each of the multi-function power modules in such an example is configured to generate DC power at least partially from an AC source.

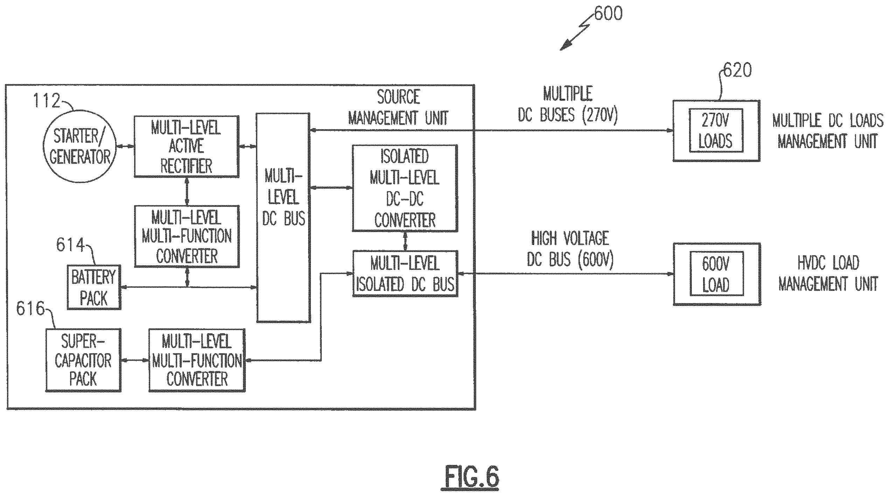

By way of example, Figure 6 schematically illustrates an exemplary electric power system 600 for utilization in a vehicle, such as a military vehicle, where the vehicle only utilizes DC loads. Fundamentally, the electrical power system 600 includes the same components as the power system 100 of Figure 1, with the omission of the multi-level inverter 170, the AC bus 140, and the AC loads 152, 154.

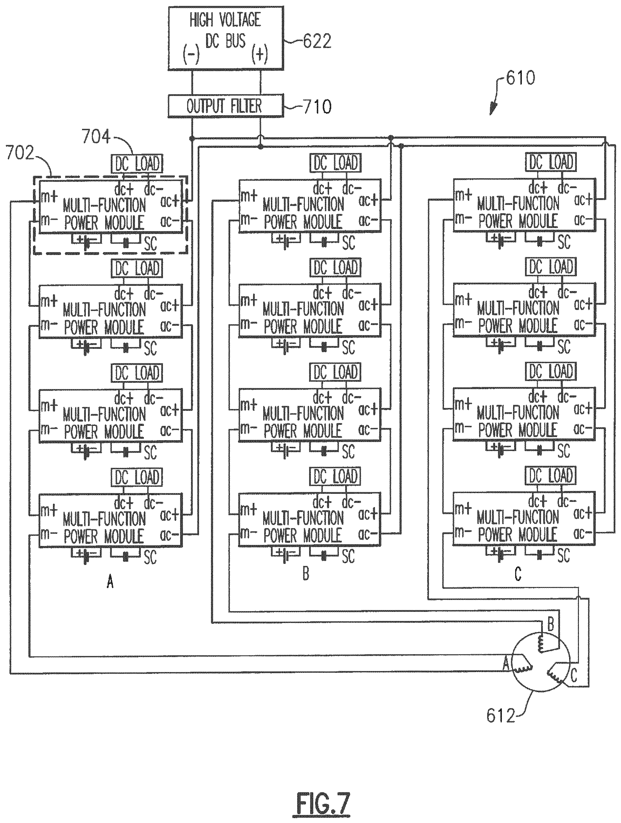

With continued reference to Figure 6, Figure 7 schematically illustrates a source management unit 610. Unlike the examples including AC distribution, the starter generator 612 is configured as three independent phases A, B, C without a joined neutral linking the phases A, B, C. As a result, each phase can be independently converted into DC and provide an output through an output filter 710 to the high voltage DC load through a high voltage DC bus 622. In some alternate examples, the starter/generator 612 can be controlled using a control coil powered by one or more of the low voltage DC busses.

Each phase of the starter/generator 612 is connected to a corresponding phase A, B, C of the source management unit 610. Each phase A, B, C of the source management unit 610 is constructed of multiple multi-function power modules 702. Within each phase A, B, C of the source management unit 610, the multi-function power modules 702 are chained together to provide multiple distinct low voltage DC outputs 704, and to combine to a single high voltage DC output provided to the output filter 710.

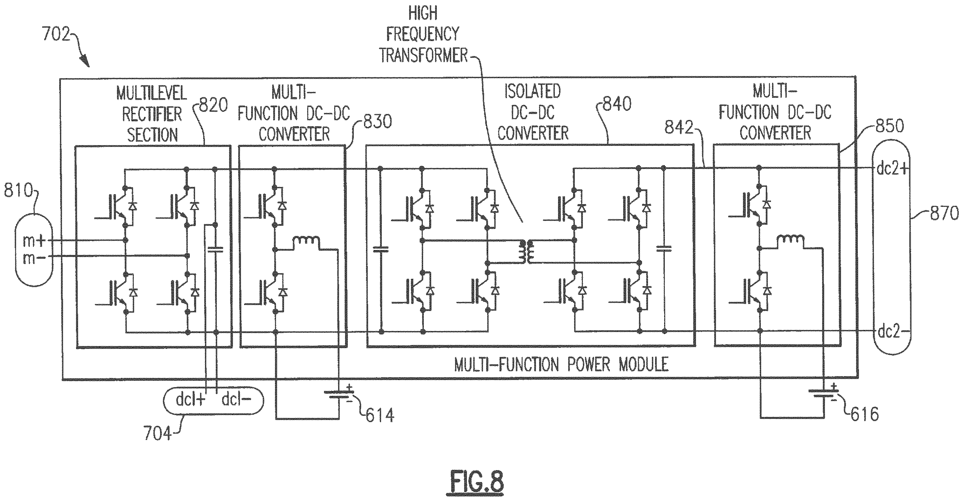

With continued reference to Figures 6 and 7, Figure 8 schematically illustrates an exemplary multi-function power module 702 in greater detail. Each multi-function power module 702 includes an AC input 810 that provides AC power to a multilevel rectifier 820. The multilevel rectifier 820 converts the AC input 810 into a DC output 704 that is provided to a corresponding low voltage DC bus, and to a multi-function DC-DC converter 830. The multi-function DC-DC converter 830 adjusts the voltage on the non-isolated DC bus or charges the battery.

The output of the multi-function DC-DC converter 830 is provided to an isolated DC-DC converter 840 which generates an electrically isolated DC output 842. The electrically isolated DC output 842 is provided to a second multi-function DC-DC converter 850 which adjusts the voltage on isolated DC bus or charges the supercapacitor 616.

The output of the second multi-function DC-DC converter 850 is a DC output 870 of the multi-function power module 702.

With reference now to all of Figures 1-8, the components within each of the multi-function power modules 202, 402, 702 are constructed using conventional H-bridges and half bridges including power transistors. A controller, such as a general purpose vehicle controller, can be configured by one of skill in the art to generate the configurations described above according to the specific needs of any given implementations.

It is further understood that any of the above described concepts can be used alone or in combination with any or all of the other above described concepts. Although an embodiment of this invention has been disclosed, a worker of ordinary skill in this art would recognize that certain modifications would come within the scope of this invention. For that reason, the following claims should be studied to determine the true scope and content of this invention.

## Claims

1. A power system architecture for a vehicle comprising:
a source management unit (110) including at least a generator (112), a first stored energy component (114), and a second stored energy component (116);
a high voltage DC bus (122) connecting a high voltage load to said source management unit (110);
at least one low voltage DC bus (132) connecting at least one low voltage DC load to the source management unit (110), the at least one low voltage DC bus (132) having a voltage lower than the high voltage DC bus (122);
the source management unit (110) including a plurality of multi-functional power modules (202) arranged together such that the source management unit (110) includes a multi-level active rectifier (162) connecting the generator (112) to a multi-level DC bus (160), a first multi-function converter (164) connecting the first stored energy component (114) to the multi-level active rectifier (162), a second multi-function converter connecting the second stored energy component to a multi-level isolated DC bus (168), an isolated multi-level DC-DC converter (166) connecting the multi-level DC bus (160) to the multi-level isolated DC bus (168), and a multi-level inverter (170) being connected to the multi-level isolated DC bus; the multi-level DC bus (160) being connected to the high voltage DC bus (122); the multi-level isolated DC bus (168) being connected to the at least one low voltage DC bus (132);
the power system further comprising an AC bus (140) connected to the source management unit via the multi-level inverter, and configured to connect to a ground based AC power source (142), the AC bus further configured to supply AC power to at least one load (152, 154);
wherein each of said multi-functional power modules therefore further comprises:
a first DC output (310), a multilevel rectifier section (320) being a section of the multi-level active rectifier (162), a first multi-function DC-DC converter (330), an isolated DC-DC converter, a multilevel inverter section (354) being a section of the multi-level inverter (170), a second multi-function DC-DC converter (360), a second at least one DC output (307);
the first DC output (310) being connected to a first side of the multi-level rectifier section (320), the first multi-function DC-DC converter (330) having a first side being connected to a second side of the multi-level rectifier (320) and in parallel being connected to an input of the isolated DC-DC converter (340), the first multi-function DC-DC converter (330) having a second side being connected to the first energy storage component (114); and
an output of the isolated DC-DC converter (340) being connected to a first side of the multilevel inverter section (354), and in parallel to a first side of the second multi-function DC-DC converter (360), a second side of the second multi-function DC-DC converter (360) being connected to the second energy storage component (116), the output of the isolated DC-DC converter (340) being connected in parallel to the second at least one DC bus output (370), the at least one DC bus output (370) being connected to the multi-level isolated DC bus.

2. A method for providing electric power to a vehicle having the power system architecture according to claim 1, the method comprising:
providing power to the first DC bus (122), the at least one second DC bus (132) and the AC bus (140) using the source management unit (110) including the generator (112), and the at least a first and second energy storage component (114,116), wherein the source management unit has the plurality of multi-functional power modules (202) configured such that the source management unit includes the multi-level active rectifier connecting the generator to a multi-level DC bus, the first multi-function converter connecting the first stored energy component to the multi-level active rectifier, the second multi-function converter (560) connecting the second stored energy component to the isolated DC bus, and the isolated DC-DC converter connecting the multi-level DC bus to the isolated DC bus.

3. The method of claim 2, further comprising providing a first DC voltage to said first DC bus, and at least one second DC voltage to said second DC bus, wherein the DC voltage of the second DC bus is lower than the DC voltage of the first DC bus.

## Patentansprüche

1. Stromsystemarchitektur für ein Fahrzeug, umfassend:
eine Quellenverwaltungseinheit (110), die zumindest einen Generator (112), eine erste Speicherenergiekomponente (114) und eine zweite Speicherenergiekomponente (116) beinhaltet;
einen Hochspannungs-DC-Bus (122), der eine Hochspannungslast mit der Quellenverwaltungseinheit (110) verbindet;
zumindest einen Niederspannungs-DC-Bus (132), der zumindest eine Niederspannungs-DC-Last mit der Quellenverwaltungseinheit (110) verbindet, wobei der zumindest eine Niederspannungs-DC-Bus (132) eine Spannung aufweist, die niedriger als der Hochspannungs-DC-Bus (122) ist;
wobei die Quellenverwaltungseinheit (110) eine Vielzahl von multifunktionalen Strommodulen (202) beinhaltet, die miteinander angeordnet sind, sodass die Quellenverwaltungseinheit (110) einen mehrstufigen aktiven Gleichrichter (162), der den Generator (112) mit einem mehrstufigen DC-Bus (160) verbindet, einen ersten Multifunktionsumwandler (164), der die erste Speicherenergiekomponente (114) mit dem mehrstufigen aktiven Gleichrichter (162) verbindet, einen zweiten Multifunktionsumwandler, der die zweite Speicherenergiekomponente mit einem mehrstufigen isolierten DC-Bus (168) verbindet, einen isolierten mehrstufigen DC-DC-Umwandler (166), der den mehrstufigen DC-Bus (160) mit dem mehrstufigen isolierten DC-Bus (168) verbindet, und einen mehrstufigen Gleichrichter (170) beinhaltet, der mit dem mehrstufigen isolierten DC-Bus verbunden ist; wobei der mehrstufige DC-Bus (160) mit dem Hochspannungs-DC-Bus (122) verbunden ist; wobei der mehrstufige isolierte DC-Bus (168) mit dem zumindest einen Niederspannungs-DC-Bus (132) verbunden ist;
wobei das Stromsystem ferner einen AC-Bus (140) umfasst, der mit der Quellenverwaltungseinheit über den mehrstufigen Gleichrichter verbunden ist, und konfiguriert ist, um mit einer massebasierten AC-Stromquelle (142) verbunden zu werden, wobei der AC-Bus ferner konfiguriert ist, um zumindest einer Last (152, 154) AC-Strom zuzuführen;
wobei jedes der multifunktionalen Strommodule daher ferner Folgendes umfasst:
einen ersten DC-Ausgang (310), einen mehrstufigen Gleichrichterabschnitt (320), bei dem es sich um einen Abschnitt des mehrstufigen aktiven Gleichrichters (162) handelt, einen ersten Multifunktions-DC-DC-Umwandler (330), einen isolierten DC-DC-Umwandler, einen mehrstufigen Gleichrichterabschnitt (354), bei dem es sich um einen Abschnitt des mehrstufigen Gleichrichters (170) handelt, einen zweiten Multifunktions-DC-DC-Umwandler (360), einen zweiten zumindest einen DC-Ausgang (307);
wobei der erste DC-Ausgang (310) mit einer ersten Seite des mehrstufigen Gleichrichterabschnittes (320) verbunden ist, wobei der erste Multifunktions-DC-DC-Umwandler (330) eine erste Seite aufweist, die mit einer zweiten Seite des mehrstufigen Gleichrichters (320) verbunden ist und parallel mit einem Eingang des isolierten DC-DC-Umwandlers (340) verbunden ist, wobei der erste Multifunktions-DC-DC-Umwandler (330) eine zweite Seite aufweist, die mit der ersten Energiespeicherkomponente (114) verbunden ist; und
wobei ein Ausgang des isolierten DC-DC-Umwandlers (340) mit einer ersten Seite des mehrstufigen Gleichrichterabschnittes (354) verbunden und parallel zu einer ersten Seite des zweiten Multifunktions-DC-DC-Umwandlers (360) ist, wobei eine zweite Seite des zweiten Multifunktions-DC-DC-Umwandlers (360) mit der zweiten Energiespeicherkomponente (116) verbunden ist, wobei der Ausgang des isolierten DC-DC-Umwandlers (340) parallel mit dem zweiten zumindest einen DC-Busausgang (370) verbunden ist, wobei der zumindest eine DC-Busausgang (370) mit dem mehrstufigen isolierten DC-Bus verbunden ist.

2. Verfahren zum Bereitstellen von Strom an ein Fahrzeug, das die Stromsystemarchitektur nach Anspruch 1 aufweist, wobei das Verfahren Folgendes umfasst:
Bereitstellen von Strom an den ersten DC-Bus (122), den zumindest einen zweiten DC-Bus (132) und den AC-Bus (140) unter Verwendung der Quellenverwaltungseinheit (110), die den Generator (112) beinhaltet, und die zumindest eine erste und zweite Energiespeicherkomponente (114, 116), wobei die Quellenverwaltungseinheit die Vielzahl von Multifunktionsstrommodulen (202) aufweist, die derart konfiguriert ist, dass die Quellenverwaltungseinheit den mehrstufigen aktiven Gleichrichter beinhaltet, der den Generator mit einem mehrstufigen DC-Bus verbindet, wobei der erste Multifunktionsumwandler die erste Speicherenergiekomponente mit dem mehrstufigen aktiven Gleichrichter verbindet, wobei der zweite Multifunktionsumwandler (560) die zweite Speicherenergiekomponente mit dem isolierten DC-Bus verbindet und wobei der isolierte DC-DC-Umwandler den mehrstufigen DC-Bus mit dem isolierten DC-Bus verbindet.

3. Verfahren nach Anspruch 2, ferner umfassend das Bereitstellen einer ersten DC-Spannung an den ersten DC-Bus und zumindest einer zweiten DC-Spannung an den zweiten DC-Bus, wobei die DC-Spannung des zweiten DC-Busses niedriger als die DC-Spannung des ersten DC-Busses ist.

## Revendications

1. Architecture de système d'alimentation pour un véhicule comprenant :
une unité de gestion de source (110) comportant au moins un générateur (112), un premier composant d'énergie stockée (114) et un second composant d'énergie stockée (116) ;
un bus CC haute tension (122) connectant une charge haute tension à ladite unité de gestion de source (110) ;
au moins un bus CC basse tension (132) connectant au moins une charge CC basse tension à l'unité de gestion de source (110), l'au moins un bus CC basse tension (132) ayant une tension inférieure au bus CC haute tension (122) ;
l'unité de gestion de source (110) comportant une pluralité de modules d'alimentation multifonctionnels (202) agencés ensemble de sorte que l'unité de gestion de source (110) comporte un redresseur actif à plusieurs niveaux (162) connectant le générateur (112) à un bus CC à plusieurs niveaux (160), un premier convertisseur multifonction (164) connectant le premier composant d'énergie stockée (114) au redresseur actif à plusieurs niveaux (162), un second convertisseur multifonction connectant le second composant d'énergie stockée à un bus CC isolé à plusieurs niveaux (168), un convertisseur CC-CC à plusieurs niveaux isolé (166) connectant le bus CC à plusieurs niveaux (160) au bus CC isolé à plusieurs niveaux (168) et un inverseur à plusieurs niveaux (170) étant connecté au bus CC isolé à plusieurs niveaux ; le bus CC à plusieurs niveaux (160) étant connecté au bus CC haute tension (122) ; le bus CC isolé à plusieurs niveaux (168) étant connecté à l'au moins un bus CC basse tension (132) ;
le système d'alimentation comprenant en outre un bus CA (140) connecté à l'unité de gestion de source via l'inverseur à plusieurs niveaux, et configuré pour se connecter à une source d'alimentation CA au sol (142), le bus CA étant en outre configuré pour fournir une alimentation CA à au moins une charge (152, 154) ;
dans laquelle chacun desdits modules d'alimentation multifonctionnels comprend donc en outre :
une première sortie CC (310), une section de redresseur à plusieurs niveaux (320) étant une section du redresseur actif à plusieurs niveaux (162), un premier convertisseur CC-CC multifonction (330), un convertisseur CC-CC isolé, une section d'inverseur à plusieurs niveaux (354) étant une section de l'inverseur à plusieurs niveaux (170), un second convertisseur CC-CC multifonction (360), une seconde au moins une sortie CC (307) ;
la première sortie CC (310) étant connectée à un premier côté de la section de redresseur à plusieurs niveaux (320), le premier convertisseur CC-CC multifonction (330) ayant un premier côté étant connecté à un second côté du redresseur à plusieurs niveaux (320) et en parallèle étant connecté à une entrée du convertisseur CC-CC isolé (340), le premier convertisseur CC-CC multifonction (330) ayant un second côté étant connecté au premier composant de stockage d'énergie (114) ; et
une sortie du convertisseur CC-CC isolé (340) étant connectée à un premier côté de la section d'inverseur à plusieurs niveaux (354), et en parallèle à un premier côté du second convertisseur CC-CC multifonction (360), un second côté du second convertisseur CC-CC multifonction (360) étant connecté au second composant de stockage d'énergie (116), la sortie du convertisseur CC-CC isolé (340) étant connectée en parallèle à la seconde au moins une sortie de bus CC (370), l'au moins une sortie de bus CC (370) étant connectée au bus CC isolé à plusieurs niveaux.

2. Procédé de fourniture d'énergie électrique à un véhicule ayant l'architecture de système d'alimentation selon la revendication 1, le procédé comprenant :
la fourniture d'énergie au premier bus CC (122), à l'au moins un second bus CC (132) et au bus CA (140) à l'aide de l'unité de gestion de source (110) comportant le générateur (112), et l'au moins un premier et un second composant de stockage d'énergie (114, 116), dans lequel l'unité de gestion de source a la pluralité de modules d'alimentation multifonctionnels (202) configurés de sorte que l'unité de gestion de source comporte le redresseur actif à plusieurs niveaux connectant le générateur à un bus CC à plusieurs niveaux, le premier convertisseur multifonction connectant le premier composant d'énergie stockée au redresseur actif à plusieurs niveaux, le second convertisseur multifonction (560) connectant le second composant d'énergie stockée au bus CC isolé, et le convertisseur CC-CC isolé connectant le bus CC à plusieurs niveaux au bus CC isolé.

3. Procédé selon la revendication 2, comprenant en outre la fourniture d'une première tension CC audit premier bus CC, et d'au moins une seconde tension CC audit second bus CC, dans lequel la tension CC du second bus CC est inférieure à la tension CC du premier bus CC.
